# EUROPEAN PATENT APPLICATION

(11) **EP 2 723 017 A1**
(43) Date of publication of application: **23.04.2014**
(21) Application number: 12800793.7
(22) Date of filing: 02.02.2012
(51) Int. Cl.: H04L 12/08

(54) **METHOD, APPARATUS AND SYSTEM FOR IMPLEMENTING DISTRIBUTED AUTO-INCREMENTING COUNTING**

(30) Priority: 15.06.2011 CN 201110160425
(71) Applicant: ZTE Corporation, Shenzhen, Guangdong 518057 (CN)
(72) Inventor: CHEN, Dianqiang, Shenzhen Guangdong 518057 (CN); GUO, Bin, Shenzhen Guangdong 518057 (CN); HAN, Yinjun, Shenzhen Guangdong 518057 (CN)
(74) Representative: Durán-Corretjer, S.L.P.
(86) International application number: PCT/CN2012/070854
(87) International publication number: WO 2012/171349

(57) **Abstract**

The present invention relates to the cloud computing field. Disclosed are a method, an apparatus and a system for implementing distributed auto-incrementing counting, so as to improve the execution efficiency of distributed auto-incrementing counting and improve the accuracy of a counting result. The method is: in a distributed cache system in the cloud computing field, for an auto-incrementing counter, saving duplicates of a counting result thereof on multiple servers, and when an auto-incrementing counting operation is executed each time, a latest counting result is selected from counting results saved for the same auto-incrementing counter on servers to execute an auto-incrementing counting operation, so that the accuracy of the counting result is effectively ensured, and meanwhile, it may be determined that the current auto-incrementing counting operation is successful as long as it is determined that the number of servers where counting results are backed up successfully reaches a set threshold value, thereby improving the execution efficiency of the auto-incrementing counting operation to a certain extent.

## Description

### Technical Field

The present invention relates to the field of cloud computing, and particularly, to a method, apparatus and system for implementing distributed incrementing counting.

### Background

Cloud computing is a product of the development and convergence of conventional computer technologies and network technologies, such as grid computing, distributed computing, parallel computing, utility computing, network storage technologies, virtualization, load balance, etc. Cloud computing is intended to integrate multiple computing entities with relatively low costs into a system with a powerful computing capability via a network.

Distributed cache is a field of the cloud computing domain, the function of which is to provide a distributed storage service of mass data with high speed read/write access capacity. The distributed cache system consists of several server nodes and serving terminals which are connected to each other, wherein the server node is responsible for storing data, the serving terminal can perform operations, such as write, read, update, delete, etc., on the data at the server node. For example, a monitor (which serves as a serving terminal) in a store counts each of the customers coming into the store and reports the counting result to a background server node for storage. Generally, in order to ensure data security, the data written by the serving terminal are impossible to be only stored at a single server node ("node" in short in the following), instead, a replication of the same piece of data is saved at multiple nodes for backup of each other. The stored data consist of Key and Value, wherein Key is equivalent to the index of the data, for example, Key is set as the total number of customers coming into a store, and Value is the data content represented by Key, such as, Value is "10203". Logically, Key and Value has a one-to-one correspondence relationship, for uniquely identifying a certain form of data storage, which storage form is also referred to as distributed incrementing counter.

The application of the distributed incrementing counter is very wide, which can realize to perform atomic add/subtract operations on a data value in a distributed environment, can realize the generation of a global unique sequence number, and can realize a global counting function, and so on. Based on the distributed incrementing counter, the application can realize many complicated functions.

Currently, the accuracy, concurrency, availability and efficiency of the distributed incrementing counter are key problems which are hard to be taken into account at the same time. In the related art, systems which ensure concurrency and accuracy usually cannot realize high availability, for example, when any one node has failed, the entire service will be interrupted, all the tasks of the failed node have to be transferred to other nodes for execution, and then the entire service is restored, which usually takes a very long time, thus the service efficiency of the distributed incrementing counter is reduced to a certain extent. Furthermore, in the related art, systems which ensure accuracy and availability cannot realize concurrency of multiple requests, for example, when multiple incrementing counting requests of the same data value are sent to the serving terminal, only one request is allowed to succeed, and the other requests will return failure, the serving terminal the request of which has failed have to retry, which also reduces the serving efficiency of the distributed incrementing counter to a certain extent. Again furthermore, systems which ensure concurrency and availability cannot ensure accuracy, for example, when multiple incrementing counting requests are executed at the same time, the counting results of various servers are not negotiated, thus resulting in inconsistency of counting results and affecting the counting accuracy thereof.

In view of the limit of the related art, a new method for implementing distributed incrementing counting is needed, so as to overcome the above-mentioned technical defects.

### Summary

In view of the above, the embodiments of the present invention provide a method and apparatus for implementing distributed incrementing counting, so as to improve the accuracy of counting results.

The specific technical solution provided in the embodiments of the present invention is described as follows.

A method for implementing distributed incrementing counting comprises:
a first server receiving a incrementing counting request message sent from a serving terminal, wherein the incrementing counting request message carries identification information for indicating an operation content;
according to the identification information, the first server acquiring a counting result stored locally and corresponding to the identification information and acquiring a counting result corresponding to the identification information and stored in each second server, wherein the first server and one or more second servers are backup for each other;
the first server performing a incrementing counting operation according to a counting result the duration of an update time of which from a current time is shortest and obtaining an updated counting result; and
the first server sending the updated counting result to each second server for backup and determining that the current incrementing counting operation succeeds when confirming that the number of second servers where the backup is performed successfully exceeds a set number.

An apparatus for implementing distributed incrementing counting comprises:
a first communication unit configured to receive a incrementing counting request message sent from a serving terminal, wherein the incrementing counting request message carries identification information for indicating an operation content;
an acquisition unit configured to, according to the identification information, acquire a counting result stored locally and corresponding to the identification information and acquire a counting result corresponding to the identification information and stored in each second server, wherein the apparatus and one or more second servers are backup for each other;
an execution unit configured to perform a incrementing counting operation according to a counting result the duration of an update time of which from a current time is shortest and obtain an updated counting result; and
a second communication unit configured to send the updated counting result to each second server for backup and determine that the current incrementing counting operation succeeds when confirming that the number of second servers where the backup is performed successfully exceeds a set number.

A system for implementing distributed incrementing counting comprises a first server and one or more second servers which are backup for each other, wherein
the first server is configured to receive a incrementing counting request message sent from a serving terminal, wherein the incrementing counting request message carries identification information for indicating an operation content, acquire a counting result stored locally and corresponding to the identification information and acquire a counting result corresponding to the identification information and stored in each second server according to the identification information, perform a incrementing counting operation according to the counting result the duration of an update time of which from a current time is shortest and obtain an updated counting result, and send the updated counting result to each second server for backup and determine that the current incrementing counting operation succeeds when confirming that the number of second servers where the backup is performed successfully exceeds a set number; and
each second server is configured to return to the first server the counting result corresponding to the identification information and stored locally in the second server according to the identification information sent from the first server, back up the updated counting result sent from the first server, and return a backup result to the first server.

In the embodiments of the present invention, for a distributed cache system in the field of cloud computing, a highly efficient method for implementing distributed incrementing counting is proposed, which is embodied as: for a incrementing counter, storing a replication of the counting result thereof on multiple servers, each time performing a incrementing counting operation, from the counting results stored for the same incrementing counter on respective servers, selecting the latest counting result to perform a incrementing counting operation, thus effectively ensuring the accuracy of counting results. Moreover, it can be determined that the current incrementing counting operation succeeds when confirming that the number of servers where the backup of the counting results is performed successfully reaches a preset threshold, thus improving the execution efficiency of the incrementing counting operation to a certain extent. When a certain server has failed, the normal operation of the distributed cache system will be not affected as long as the number of servers which operate normally reaches to a set threshold, thus effectively improving the stability, security and availability of the distributed cache system.

### Brief Description of the Drawings

Fig. 1 is a diagram of the architecture of a distributed cache system in an embodiment of the present invention;
Fig. 2 is a schematic diagram of the function architecture of a coordination server in an embodiment of the present invention;
Fig. 3 is a flowchart of an overview of implementing a incrementing counting operation in an embodiment of the present invention; and
Fig. 4 is a flowchart of an example of implementing a incrementing counting operation in an embodiment of the present invention.

### Detailed Description of the Embodiments

In a distributed cache system, in order to provide an available highly efficient incrementing service and not affect the overall service performance of the system when a certain server has failed, the embodiments of the present invention provide a highly efficient distributed incrementing counting method. The method is embodied as: employing a multi-replication mechanism at the server end, that is, for the same incrementing counter, storing a data replication thereof on multiple servers, each time performing a incrementing counting operation, if the number of servers which succeed in the incrementing counting operation reaches a preset threshold, it is deemed that the incrementing counting operation of the entire system succeeds. Compared to the related art, the advantages of the embodiments of the present invention lie at least in that when a certain server has failed, the normal operation of the distributed cache system is not affected as long as the number of servers which operate normally reach a set threshold.

Hereinafter, the preferred embodiments of the present invention will be introduced in detail in conjunction with the drawings.

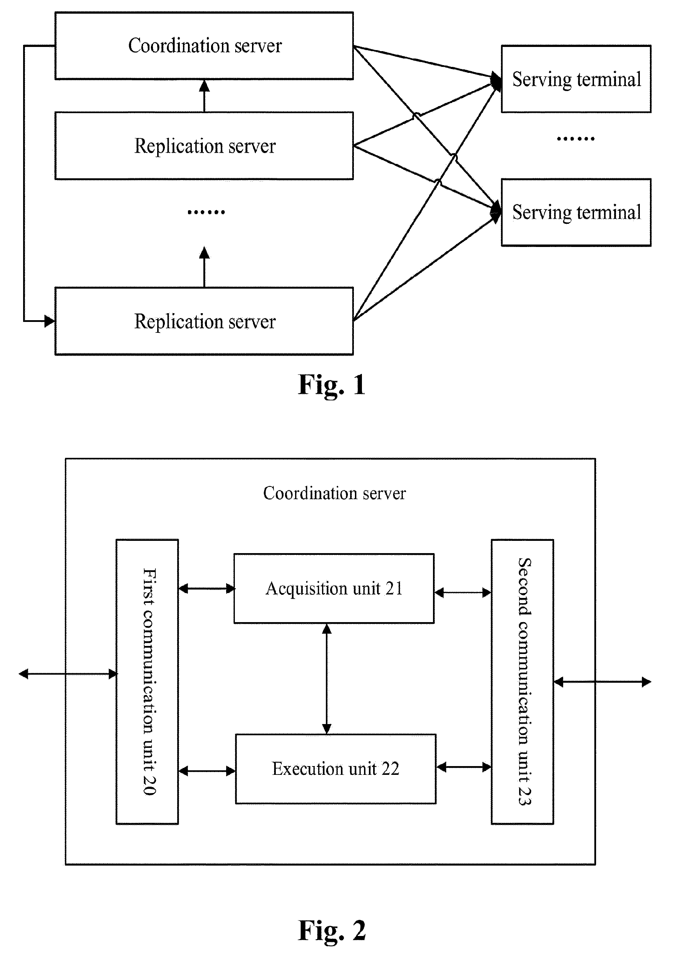

As shown in Fig. 1, in an embodiment of the present invention, there are multiple servers which are backup for each other provided in a distributed cache system, wherein
a first server, also referred to as coordination server, is configured to receive a incrementing counting request message sent from a serving terminal, wherein the incrementing counting request message carries identification information for indicating an operation content, acquire a counting result stored locally and corresponding to the identification information and acquire a counting result corresponding to the identification information and stored in each second server according to the identification information, perform a incrementing counting operation according to the counting result the duration of an update time of which from a current time is shortest and obtain an updated counting result, and send the updated counting result to each second server for backup and determine that the current incrementing counting operation succeeds when confirming that the number of second servers where the backup is performed successfully exceeds a set number; and a second server, also referred to as replication server, is configured to return to the coordination server the counting result corresponding to the identification information and stored locally according to the identification information sent from the coordination server, back up the updated counting result sent from the coordination server, and return a backup result to the coordination server.

As shown in Fig. 1, connections are established between a serving terminal and multiple servers (including a coordination server and one or more replication servers), connections are also established among the multiple servers and the multiple servers operate normally. When a certain Key and a corresponding Value are stored in the multiple servers, one server therein will be selected as a coordination server by the serving terminal during the subsequent incrementing counting operation, the remaining one or more servers are referred to as one or more replication servers, and the coordination server and the one or more replication servers are backup for each other, that is, the same Key and a corresponding Value are stored in these servers. For different Keys and Values, the coordination server and the one or more replication servers selected by the serving terminal may be the same or may be different. For the same Key and Value, during different incrementing counting operation flows, the coordination server and the one or more replication servers selected by the serving terminal may be the same or may be different.

During practical application, if the coordination server corresponding to a certain Key (referred to as Key A, KA in short hereinafter) has failed, then the system can select a replication server the priority of which meets requirements from the corresponding replication servers in an order from high priority to low priority as a new coordination server. For example, the replication server the priority of which is the highest, second highest, third highest may be selected as a new coordination server, the other replication servers are still replication servers, so that the new coordination server and replication servers are still backup for each other, thus effectively shorting the troubleshooting time and not affecting the execution result of the subsequent incrementing counting operation.

It can be known from the above-mentioned technical solution that in this embodiment, for the same Key, during different incrementing counting operation flows, the coordination server selected by the serving terminal may be different, and when the coordination server has failed, the serving terminal can reselect one from the one or more replication servers as a coordination server. Therefore, based on this execution method, the following situation may occur: the Value corresponding to KA and stored in the coordination server is not the latest data, that is, the duration of the update time of the Value corresponding to KA and stored in the coordination server from the current time is greater than that of the update time of the Value corresponding to KA and stored in a certain replication server from the current time, thus, when performing a incrementing counting operation, the coordination server needs to take into account relevant information about the Value corresponding to KA and stored in each replication server comprehensively, and this procedure will be described further in the following embodiments.

As shown in Fig. 2, in an embodiment of the present invention, the coordination server comprises a first communication unit 20, an acquisition unit 21, an execution unit 22 and a second communication unit 23, wherein
the first communication unit 20 is configured to receive a incrementing counting request message sent from a serving terminal, wherein the incrementing counting request message carries identification information for indicating an operation content;
the acquisition unit 21 is configured to, according to the identification information, acquire a counting result stored locally and corresponding to the identification information and acquire a counting result corresponding to the identification information and stored in each replication server;
the execution unit 22 is configured to per form a incrementing counting operation according to the counting result the duration of an update time of which from a current time is shortest and obtain an updated counting result; and
the second communication unit 23 is configured to send the updated counting result to each replication server for backup and determine that the current incrementing counting operation succeeds when confirming that the number of second servers where the backup is performed successfully exceeds a set number.

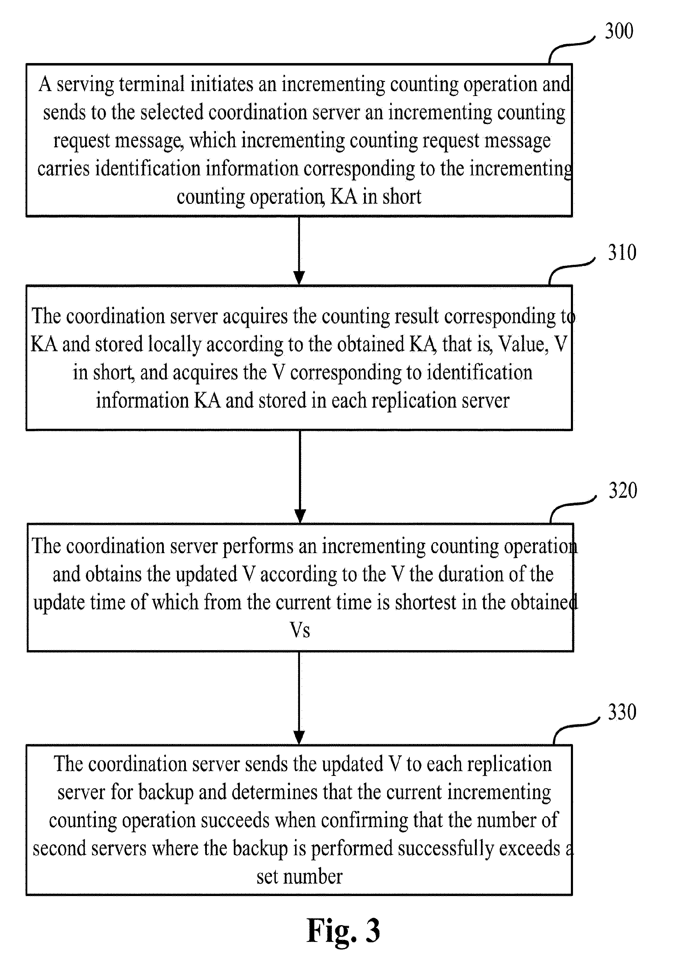

Based on the above-mentioned technical solution, as shown in Fig. 3, in an embodiment of the present invention, in a distributed cache system, the detailed flow for implementing a incrementing counting operation is as follows.

In Step 300: a serving terminal initiates a incrementing counting operation and sends to a selected coordination server a incrementing counting request message, which incrementing counting request message carries identification information corresponding to the incrementing counting operation, that is, Key, referred to as Key A, KA in short hereinafter.

In the embodiment of the present invention, the serving terminal may select a server node according to the content of the incrementing counting operation represented by KA and sends a incrementing counting request message to the selected server, which selected server is referred to as a coordination server of this operation. For different Keys, the coordination server selected by the serving terminal may be the same or may be different.

For example, the serving terminal is a monitor in a store, and when this monitor determines that there is a new customer coming into the store, the monitor sends a incrementing counting request message to the coordination server selected in the background, the KA carried in which incrementing counting request message represents that the content of the current incrementing counting operation is "the total number of customers coming into the store".

In Step 310: the coordination server acquires a counting result corresponding to KA and stored locally according to the obtained KA, that is, Value, which is referred to as V in short hereinafter, and acquires the V corresponding to KA and stored in each replication server.

When performing Step 310, after receiving the incrementing counting request message carrying Key and sent by the serving terminal, the coordination server attempts to read the V corresponding to this Key from the local and sends a replication read request message to one or more servers which also save this Key, wherein the one or more servers which also save this Key are referred to as one or more replication servers for this operation. Specifically, the coordination server sends a replication acquisition request message to each replication server corresponding to KA, which replication acquisition request message at least carries KA, to make part/all of replication servers return the V corresponding to KA and stored locally in the replication servers. The specific implementation contains but not limited to the following two manners.

In manner A, the coordination server sends a replication acquisition request message carrying KA to each replication server corresponding to KA, and after receiving KA, each replication server returns the KA and the V corresponding to KA and stored locally to the coordination server (thereplication server returning KA to the coordination server is for the sake of enabling that the coordination server clearly knows the V of which Key is received). By way of executing manner A, the most comprehensive data can be obtained, thus performing the most accurate incrementing counting operation.

On the other hand, if the replication server which receives the replication acquisition request message carrying the Key does not save the V corresponding to this Key, then the replication server can notify the coordination server that it does not save the relevant data, which will be not described here.

In manner B, the coordination server sends a replication acquisition request message carrying KA and the corresponding V (the V saved in the coordination server) to each replication server corresponding to KA, and after receiving KA and V, each replication server judges whether the duration of the update time of the V corresponding to KA and stored locally in the replication server from the current time is less than the duration of the update time of the received V from the current time, if yes, then the replication server returns to the coordination server the KA and the V corresponding to KA and saved locally in the replication server, otherwise, the replication server only returns KA to the coordination server. By way of executing manner B, the network data traffic can be reduced effectively, lowering the network running load.

During practical application, regardless executing manner A or manner B, in order to improve the processing efficiency and at the same time avoid the interruption of the incrementing counting operation due to the fact that some replication servers have failed temporarily, preferably, after sending the replication acquisition request message, the coordination server does not have to wait to perform the subsequent operations until the feedback information of all the replication servers is received, instead, the coordination server starts to perform the subsequent operations when determining that the number of replication servers which return KA and the corresponding V and/or return KA reaches a set threshold (referred to as threshold X), that is, after sending the replication acquisition request message, the coordination server starts to perform Step 320 when determining that the number of replication servers which perform feedback in response to this replication acquisition request message reaches the threshold X.

In Step 320: the coordination server performs a incrementing counting operation and obtains the updated V according to the V the duration of the update time of which from the current time is shortest in the obtained Vs.

In an embodiment of the present invention, in Step 320, there are many methods for the coordination server to judge the duration of the update of V from the current time. For example, the coordination server may determine the duration of the update time of V from the current time according to the timestamp recorded corresponding to V, the later the time recorded by the timestamp, the shorter the duration of the update time from the current time is. Again for example, the coordination server may determine the duration of the update time of V from the current time according to the version number recorded corresponding to V, the bigger the version number, the shorter the duration of the update time from the current time is. These two implementations are merely examples, and the present invention is not limited to these two implementations, other examples will not be described here. When performing the incrementing counting operation, the coordination server performs the above-mentioned judgment operation, which can effectively ensure the data consistency of the system in the incrementing counting operation, thus ensuring the accuracy of the updated V.

On the other hand, if in Step 300, multiple serving terminals send to the coordination server incrementing counting request messages for the same incrementing counter, that is, the coordination server receives incrementing counting request messages carrying the same Key frommultiple serving terminals, then the coordination server may first merge the incrementing numbers indicated by the multiple incrementing counting request messages and then perform the subsequent operations. In the above procedure, the merge operation may be performed immediately after the incrementing counting request messages are received, and may also be performed after obtaining each V and before performing the incrementing counting operation, which will not be described here. For example, if the coordination server receives incrementing counting request messages carrying KA from 100 serving terminals, and the requested incrementing number of each incrementing counting request message is 1, then the coordination server will merge the incrementing numbers to be 100 and then perform a incrementing counting operation on the updated V obtained currently, that is, the current latest V is added with 100 to obtain the updated V. Correspondingly, when the coordination server feeds back the updated V to any serving terminal, the coordination server only needs to subtract the incrementing numbers which are requested by the other serving terminals. As such, the situation where one hundred operations have to be performed in the related art can be solved by performing one operation in this embodiment, which greatly saves the operation time of the incrementing counting operation and improving the execution efficiency of the incrementing counting operation.

In Step 330: the coordination server sends the updated V to each replication server for backup, preferably, KA and the updated V may be sent together, and the coordination server determines that the current incrementing counting operation succeeds when confirming that the number of second servers where the backup is performed successfully exceeds a set number.

During the process of executing Step 330, after receiving the updated V sent by the server, each replication server needs to judge whether the duration of the update time of the received and updated V from the current time is less than the duration of the update time of the V corresponding to KA and saved locally in the replication server from the current time, if yes, then the updated V will be saved and the coordination server is notified of backup success; otherwise, the data will not be saved, and the coordination server is notified of backup failure. When performing backup, each replication server performs the above-mentioned judgment operation, which can enhance the data consistency of the system in the incrementing counting operation, thus ensuring the accuracy of the updated V. Preferably, in order to improve the execution efficiency of the system, the coordination server does not have to wait to determine that the incrementing counting operation succeeds until the feedback information of all the replication servers is received, instead, it can determine that the current incrementing counting operation succeeds when it is confirmed that the number of replication servers where the backup succeeds reaches a set threshold (referred to as threshold Y), and the threshold Y here may be the same as the value of the above mentioned threshold X, and may be different.

In the above-mentioned embodiment, if the selected coordination server has failed, the serving terminal can select a replication server the priority of which meets the conditions as a new coordination server to perform the incrementing counting operation according to the priority preset for each replication server, which will not affect the last execution result and effectively improves the stability and security of the distributed cache system. If some replication servers of the replication servers have failed, then the overall flow of the incrementing counting operation will not be affected as long as the number of replication servers which have not failed reaches to the threshold X and/or threshold Y, that is, as long as it does not affect the coordination server to acquire from each replication server the V saved thereby and does not affect the coordination server to receive a response returned by the backup server which represents that the incrementing counting operation succeeds, then the failure of the backup server will not affect the work performance of the incrementing counter in the distributed cache system. As such, the stability and security of the distributed cache system are further improved.

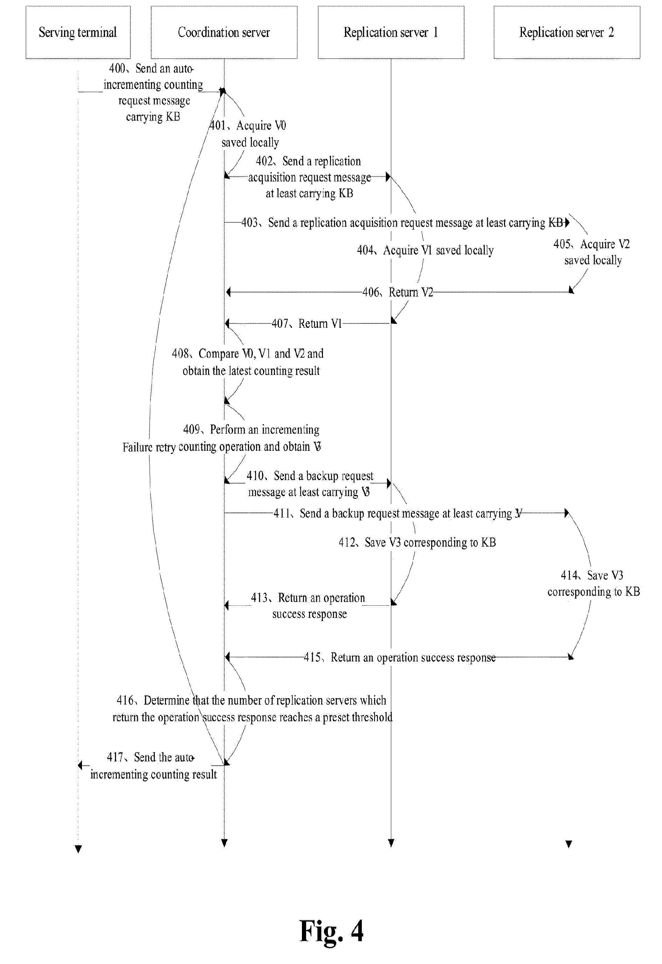

Based on the above-mentioned embodiment, as shown in Fig. 4, it is assumed that one serving terminal, one coordination server and two replication servers, which are referred to as replication server 1 and replication server 2 respectively, are provided in the distributed cache system, wherein the incrementing counting relevant data saved in coordination server are Key B - Value 0, KB-V0 in short, the incrementing counting relevant data saved in replication server 1 are Key B - Value 1, KB-V1 in short, and the incrementing counting relevant data saved in replication server 2 are Key B - Value 2, KB-V2 in short, wherein KB represents "the number of customers who use ATM terminal", the value of V0 is "150", the value of V1 is "148", the value of V2 is "152", then the specific flow for realizing the incrementing counting operation is as follows.

In Step 400: the serving terminal sends to the coordination server a incrementing counting request message carrying KB, assuming that the requested incrementing counting number is 1.

In Step 401: the coordination server acquires V0 corresponding to KB and saved locally.

In Step 402: the coordination server sends to replication server 1 a replication acquisition request message at least carrying KB.

In Step 403: the coordination server sends to replication server 2 a replication acquisition request message at least carrying KB.

In Step 404: the replication server 1 acquires V1 corresponding to KB and saved locally in the replication server 1.

In Step 405: the replication server 2 acquires V2 corresponding to KB and saved locally in the replication server 2.

In Step 406: the replication server 2 returns V2 to the coordination server.

In Step 407: the replication server 1 returns V1 to the coordination server.

As shown in Fig. 4, in this embodiment, Step 402, Step 404, Step 407, Step 403, Step 405 and Step 406 can be performed in parallel or performed in sequence, the execution order of which is not limited here.

In Step 408: the coordination server compares the update time of V0, V1 and V2 and determines the latest counting result is V2, the value of which is "152".

In Step 409: the coordination server performs a incrementing counting operation based on V2 and the requested incrementing counting number and obtains the updated V3, the value of which is "153".

In Step 410: the coordination server sends to replication server 1 a backup request message at least carrying V3.

In Step 411: the coordination server sends to replication server 2 a backup request message at least carrying V3.

In Step 412: the replication server 1 saves the latest V3 corresponding to KB.

In Step 413, the replication server 1 returns an operation success response to the coordination server.

In Step 414: the replication server 2 saves the latest V3 corresponding to KB.

In Step 415: the replication server 2 returns an operation success response to the coordination server.

As shown in Fig. 4, in this embodiment, Step 410, Step 412, Step 413, Step 411, Step 414 and Step 415 can be performed in parallel or performed in sequence, the execution order of which is not limited here.

In Step 416: the coordination server determines that the number of replication servers which return the operation success response reaches a preset threshold (such as threshold 1).

As shown in Fig. 4, in this embodiment, when performing Step 416, if the coordination server determines that the number of replication servers which returns the operation success response does not reach the preset threshold, it can return to Step 401 to perform failure retry and ends the current flow and alarms the serving terminal when the number of times of retry reaches to a set threshold but the incrementing counting operation is still not performed successfully, which will not be described here.

In Step 417: the coordination server returns the incrementing counting result to the serving terminal, that is, V3.

In summary, in the embodiments of the present invention, for a distributed cache system in the field of cloud computing, a highly efficient method for implementing distributed incrementing counting is proposed, which is embodied as: for a incrementing counter, storing a replication of the counting result thereof on multiple servers, each time performing a incrementing counting operation, for the counting results stored for the same incrementing counter on each server, selecting the latest counting result to perform a incrementing counting operation, thus effectively ensuring the accuracy of counting results. At the same time, it can be determined that the current incrementing counting operation succeeds only by way of confirming that the number of servers the backup of the countingresults of which reaches a set threshold, thus improving the execution efficiency of the incrementing counting operation to a certain extent. When a certain server has failed, the normal operation of the distributed cache system will be not affected as long as the number of servers which operate normally reaches to a set threshold, thus effectively improving the stability, security and availability of the distributed cache system. As such, the requirements on availability, high efficiency, concurrency and accuracy of the distributed incrementing counter by the distributed cache system are met.

Apparently, those skilled in the art can make various modifications and variations to the present invention without departing from the spirit and scope of the present invention. Thus, if these modifications and variations of the present invention belong to the scope of the claims of the present invention and an equivalent technology thereof, then the present invention is also intended to contain these modifications and variations.

## Claims

1. A method for implementing distributed incrementing counting, **characterized by** comprising:
a first server receiving a incrementing counting request message sent from a serving terminal, wherein the incrementing counting request message carries identification information for indicating an operation content;
according to the identification information, the first server acquiring a counting result stored locally and corresponding to the identification information and acquiring a counting result corresponding to the identification information and stored in each second server, wherein the first server and one or more second servers are backup for each other;
the first server performing a incrementing counting operation according to a counting result the duration of an update time of which from a current time is shortest and obtaining an updated counting result; and
the first server sending the updated counting result to each second server for backup and determining that the current incrementing counting operation succeeds when confirming that the number of second servers where the backup is performed successfully exceeds a set number.

2. The method as claimed in claim 1, **characterized by** further comprising: when the first server receives at least two incrementing counting request messages carrying the same identification information sent from one or more serving terminals, the first server merging incrementing numbers indicated by the at least two incrementing counting request messages and then performing a subsequent operation.

3. The method as claimed in claim 1, **characterized in that** acquiring the counting result corresponding to the identification information and stored in each second server according to the identification information comprises:
the first server sending a replication acquisition request message carrying the identification information to each second server corresponding to the identification information, to make each second server which receives the identification information return to the first server the identification information and the counting result corresponding to the identification information and stored locally in the each second server;
or, the first server sending to each second server corresponding to the identification information a replication acquisition request message carrying the identification information and a replication of the counting result corresponding to the identification information and stored in the first server, to make each second server which receives the identification information and the counting result return to the first server the identification information and the counting result corresponding to the identification information and stored locally in the second server when the second server determines that the duration of the update time of the counting result corresponding to the identification information and stored locally in the second server from the current time is less than the duration of the update time of the received counting result from the current time.

4. The method as claimed in claim 3, **characterized by** further comprising: after sending the replication acquisition request message, the first server performing the incrementing counting operation according to the counting result in the obtained counting results the duration of the update time of which from the current time is shortest when the first server determines that the number of replication servers which give feedback in response to the replication acquisition request message reaches a preset threshold.

5. The method as claimed in any one of claims 1 to 4, **characterized in that** the first server performing the incrementing counting operation according to the counting result in the obtained counting results the duration of the update time of which from the current time is shortest comprises:
the first server performing the incrementing counting operation according to the counting result in the obtained counting results an indication time of a timestamp of which is the latest;
or, the first server performing the incrementing counting operation according to the counting result in the obtained counting results a version number of which is the biggest.

6. The method as claimed in claim 5, **characterized by** further comprising: when a serving terminal determines that a coordination server has failed, the serving terminal selecting a replication server the priority of which meets conditions as a new coordination server according to a preset priority of each replication server.

7. An apparatus for implementing distributed incrementing counting, **characterized by** comprising:
a first communication unit configured to receive a incrementing counting request message sent from a serving terminal, wherein the incrementing counting request message carries identification information for indicating an operation content;
an acquisition unit configured to, according to the identification information, acquire a counting result stored locally and corresponding to the identification information and acquire a counting result corresponding to the identification information and stored in each second server, wherein the apparatus and one or more second servers are backup for each other;
an execution unit configured to perform a incrementing counting operation according to a counting result the duration of an update time of which from a current time is shortest and obtain an updated counting result; and
a second communication unit configured to send the updated counting result to each second server for backup and determine that the current incrementing counting operation succeeds when confirming that the number of second servers where the backup is performed successfully exceeds a set number.

8. The apparatus as claimed in claim 7, **characterized in that** when the first communication unit receives at least two incrementing counting request messages carrying the same identification information sent from one or more serving terminals, the first communication unit is configured to merge incrementing numbers indicated by the at least two incrementing counting request messages and then perform a subsequent operation.

9. The apparatus as claimed in claim 7, **characterized in that** the acquisition unit is configured to acquire the counting result corresponding to the identification information and stored in each second server according to the identification information in the following manner:
the acquisition unit is configured to send a replication acquisition request message carrying the identification information to each second server corresponding to the identification information via the second communication unit, to make each second server which receives the identification information return to the apparatus the identification information and the counting result corresponding to the identification information and stored locally in the each second server;
or, the acquisition unit is configured to send to each second server corresponding to the identification information a replication acquisition request message carrying the identification information and a replication of the counting result corresponding to the identification information and stored in the first server via the second communication unit, to make each second server which receives the identification information and the counting result return to the apparatus the identification information and the counting result corresponding to the identification information and stored locally in the second server when the second server determines that the duration of the update time of the counting result corresponding to the identification information and stored locally in the second server from the current time is less than the duration of the update time of the received counting result from the current time.

10. The apparatus as claimed in claim 9, **characterized in that** after the acquisition unit sends the replication acquisition request message via the second communication unit, the execution unit is configured to perform the incrementing counting operation according to the counting result in the obtained counting results the duration of the update time of which from the current time is shortest when the execution unit determines that the number of replication servers which give feedback in response to the replication acquisition request message reaches a preset threshold.

11. The apparatus as claimed in any one of claims 7 to 10, **characterized in that** the execution unit is configured to perform the incrementing counting operation according to the counting result in the obtained counting results the duration of the update time of which from the current time is shortest in the following manner:
the execution unit is configured to perform the incrementing counting operation according to the counting result in the obtained counting results an indication time of a timestamp of which is the latest;
or, the execution unit is configured to perform the incrementing counting operation according to the counting result in the obtained counting results a version number of which is the biggest.

12. A system for implementing distributed incrementing counting, **characterized by** comprising a first server and one or more second servers which are backup for each other, wherein
the first server is configured to receive a incrementing counting request message sent from a serving terminal, wherein the incrementing counting request message carries identification information for indicating an operation content, acquire a counting result stored locally and corresponding to the identification information and acquire a counting result corresponding to the identification information and stored in each second server according to the identification information, perform a incrementing counting operation according to the counting result the duration of an update time of which from a current time is shortest and obtain an updated counting result, and send the updated counting result to each second server for backup and determine that the current incrementing counting operation succeeds when confirming that the number of second servers where the backup is performed successfully exceeds a set number; and
each second server is configured to return to the first server the counting result corresponding to the identification information and stored locally in the second server according to the identification information sent from the first server, back up the updated counting result sent from the first server, and return a backup result to the first server.
